Europäisches Patentamt

European Patent Office

Office européen des brevets

(11) Publication number: **0 309 069 B1**

(12) **EUROPEAN PATENT SPECIFICATION**

(45) Date of publication of patent specification: **17.06.92**  (51) Int. Cl.5: **D05B 35/10**, D05B 21/00

(21) Application number: **88301795.6**

(22) Date of filing: **01.03.88**

(54) Computerized sewing apparatus.

(30) Priority: **25.09.87 US 101084**

(43) Date of publication of application:
**29.03.89 Bulletin 89/13**

(45) Publication of the grant of the patent:
**17.06.92 Bulletin 92/25**

(84) Designated Contracting States:
**AT BE CH DE ES FR GB GR IT LI LU NL SE**

(56) References cited:
**EP-A- 0 020 259**     **EP-A- 0 102 524**
**FR-A- 2 096 012**     **US-A- 3 459 145**
**US-A- 4 100 864**     **US-A- 4 498 404**

(73) Proprietor: **Sadeh, Yaacov**
**11/6 Bialik**
**Nes Ziona(IL)**

Proprietor: **Makover, Yaacov**
**87 Moshav Bet Elazari**
**Rechovot(IL)**

Proprietor: **Mardix, Bar Cochva**
**Ha Rechesim Street**
**Ramat Gan(IL)**

(72) Inventor: **Sadeh, Yaacov**
**11/6 Bialik**
**Nes Ziona(IL)**
Inventor: **Makover, Yaacov**
**87 Moshav Bet Elazari**
**Rechovot(IL)**
Inventor: **Mardix, Bar Cochva**
**Ha Rechesim Street**
**Ramat Gan(IL)**

(74) Representative: **Hackett, Sean James et al**
**Marks & Clerk 57-60 Lincoln's Inn Fields**
**London WC2A 3LS(GB)**

## Description

RELATED APPLICATIONS

The present application is a Continuation-In-Part of our co-pending U.S. Patent Application Serial No. 038,773 filed 14 April 1987.

FIELD OF THE INVENTION

The present invention relates to automatic sewing apparatus and, particularly, to computerized sewing apparatus which is gaining widespread use in both the footwear and garment industries.

BACKGROUND OF THE INVENTION

Computerized sewing apparatus was introduced more than a decade ago. Conventional systems perform sewing operations along a predetermined path using a sewing program. The main drawback of such systems lies in the fact that these systems are blind, i.e., they cannot see the work piece which is being sewn. This blindness is a severe handicap for present generation sewing systems. Leather and textiles are flexible materials which can change their size and position before and during the sewing operation. Hence, occasionally, the predetermined sewing path does not match the actual piece being sewn, and the pieces must be disqualified and rejected by quality inspectors.

A further drawback rests in the fact that, in an attempt to maintain accurate positioning of the pieces to be sewn relative to the sewing head, the sewn pieces are firmly held in a complicated workholder. This workholder aims to avoid, with limited success, the potential inaccuracy of pieces placement. Furthermore, the placement of the pieces in this workholder is complicated and, therefore, today is done manually by a trained operator.

There is disclosed in U.S. PATENT 4,498,404 automatic sewing apparatus including a manipulator for manipulating the workpiece on a sewing table, the manipulator head and table being designed for selectively applying either positive or negative fluid pressure in order to selectively produce either suction for holding the workpiece, or an air cushion for facilitating movement of the workpiece by the manipulator. The apparatus also includes a workpiece detector continuously monitoring the location of the edge of the workpiece with respect to the sewing head.

The sewing apparatus in U.S. Patent 4,498,404 is a conventional device permitting sewing in one direction only. That is, the workpiece must tie manipulated so as to always be presented to the needle from the same side of the sewing head.

When a corner is reached necessitating a change in sewing direction, the apparatus stops, the workpiece is rotated through the appropriate angled, and sewing commences again with movement in the original direction. The edge detector provided is a stationary line scan camera of photodiodes located and oriented so as to monitor the edge of the workpiece relative to a line perpendicular to the direction of sewing.

With the advent of computerized sewing systems, the limitations of uni-directional sewing were felt and systems have been developed permitting multi-directional sewing. In other words, the material to be sewn can approach the needle from any direction. This results in a tremendous time saving when sewing patterns including corners and curves, since the workpiece can be moved in the desired direction without stopping the apparatus. In such a system, however, an edge detector such as shown in USP 4,498,404 would be ineffective due to the constantly changing direction of sewing.

Furthermore, there is no discussion in USP 4,498,404 of illumination conditions or set up. It is known in the art that without appropriate illumination, no image analysis can be performed effectively. Accordingly the disclosure with regard to edge detection is this patent is limited in scope.

US patent specification 3 459 145 relates to a self-programmed automatic embroidery system comprising the features defined in the pre-characterizing part of Claims 1 and 12 below.

European patent specification 0020259A1 relates to a machine for sewing a curved edge of a piece of textile. The machine comprises a sewing machine, a worktable for displacing the textile along an axis and means for moving the textile in a predetermined pattern.

SUMMARY OF THE INVENTION

It is an object of the present invention to provide multi-directional sewing apparatus with incorporated visual edge position sensing and the capability to modify the sewing path during sewing in accordance with the actual position of the sewn piece.

According to the present invention there is provided a computerized sewing apparatus comprising:

a sewing head permitting multi-directional sewing mounted on a main frame;

a workholder coupled to the main frame and manipulated relative to the sewing head in a horizontal plane by a two dimensional manipulator;

a microprocessor coupled to said manipulator for causing the workholder to move in a pre-programmed pattern relative to the sewing head;

characterized by:

means for sensing the edge position of an object on said workholder and arranged to provide an output signal corresponding thereto to said microprocessor;

said sensing means including a scanning camera coupled to the sewing head and disposed for rotation concentric to a needle bar mounted in said sewing head and arranged for scanning at least one line tangential to an imaginary circle around the needle's piercing point in the sewing plane;

said camera comprising means for generating a first output signal corresponding to said at least one scanned line;

encoder means coupled to said camera for providing a second output signal corresponding to the position of said camera;

means in microprocessor for receiving said first and second output signals and converting them into a third output signal corresponding to the edge position of said object;

comparator means in said microprocessor to compare the actual edge position with the programmed expected edge position and to determine any deviation; and

means coupled to said microprocessor for modifying the sewing path during sewing to compensate for any such deviation.

According to the present invention, there is further provided a computerized sewing apparatus comprising:

a sewing head permitting multi-directional sewing mounted on a main frame;

a workholder coupled to the main frame and manipulated relative to the sewing head in a horizontal plane by a two dimensional manipulator;

a microprocessor coupled to said manipulator for causing the workholder to move in a pre-programmed pattern relative to the sewing head;

characterized by:

means for sensing the edge position of an object on said workholder and arranged to provide an output signal corresponding thereto to said microprocessor;

said sensing means being arranged for simultaneous scanning of an area around the sewing point greater than the field of view of a single scanner;

said sensing means including at least two stationary cameras disposed about the sewing head with scanning fields of view partially overlapping and together covering the entire 360 degrees two dimensional area around a needle bar disposed in said sewing head;

a plurality of lights mounted about the sewing head for providing illumination from any desired direction;

comparator means in said microprocessor to compare the actual edge position with the programmed expected edge position and to determine any deviation; and

means coupled to said microprocessor for modifying the sewing path during sewing to compensate for any such deviation.

BRIEF DESCRIPTION OF THE DRAWINGS

Further features and advantages of the invention will be apparent from the description below. The invention is herein described, by way of example only, with reference to the accompanying drawings wherein:

Fig. 1 is a perspective view illustrating one form of computerized sewing apparatus constructed and operative in accordance with the present invention;

Fig. 2 is an enlarged detailed view of the optical edge sensor and its attachment relative to the sewing head;

Fig. 3 illustrates the camera and illumination principle of the sewing apparatus of Fig. 1;

Fig. 4 is a block diagram of the edge sensing hardware and servo driver used to analyze and process the signal from the scanner and to transfer the information to the main processor.

Fig. 5 is a perspective view illustrating an alternate form of computerized sewing apparatus constructed and operative in accordance with the present invention;

Fig. 6 is a front view of the apparatus of Fig. 5; and

Fig. 7 is a schematic illustration of the scanned area in the apparatus of Fig. 5.

DETAILED DESCRIPTION OF THE INVENTION

The present invention relates to computerized multi-directional sewing apparatus having incorporated therein edge position sensing means and the capability to modify, in real time, a pre-programmed sewing path in accordance with the actual position of the piece being sewn. The apparatus comprises a sewing head permitting multi-directional sewing, a workholder, a microprocessor coupled to the workholder for moving the workholder relative to the sewing head, means for sensing the edge position of an object on the workholder and arranged to provide an output signal corresponding thereto to the microprocessor, comparator means in the microprocessor to compare the actual edge position with the programmed expected edge position and to determine any deviations and means coupled to the microprocessor for modifying the sewing path during sewing to compensate for any such deviation.

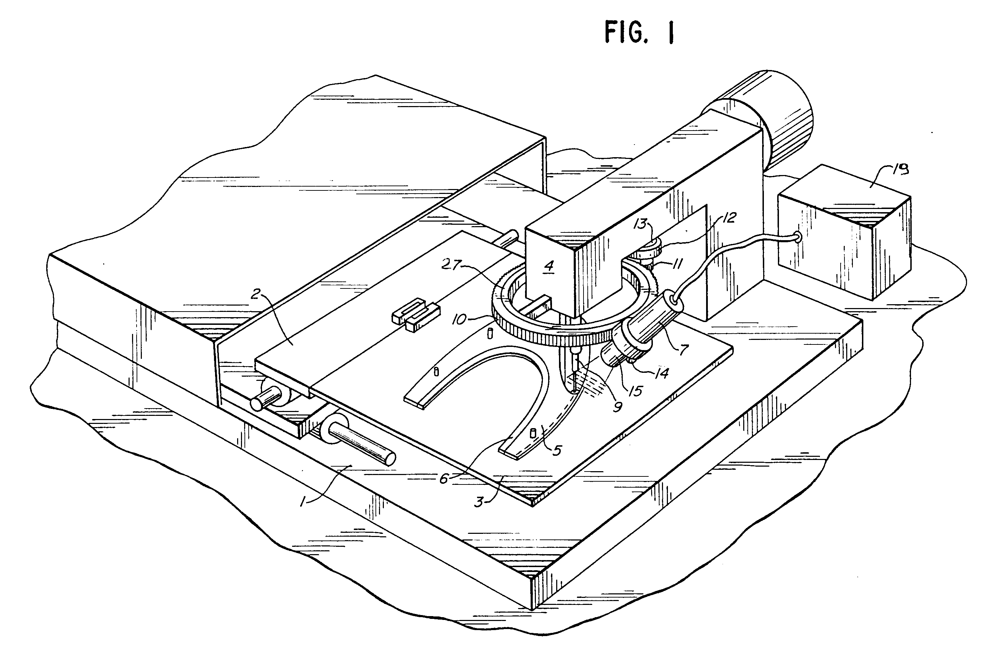

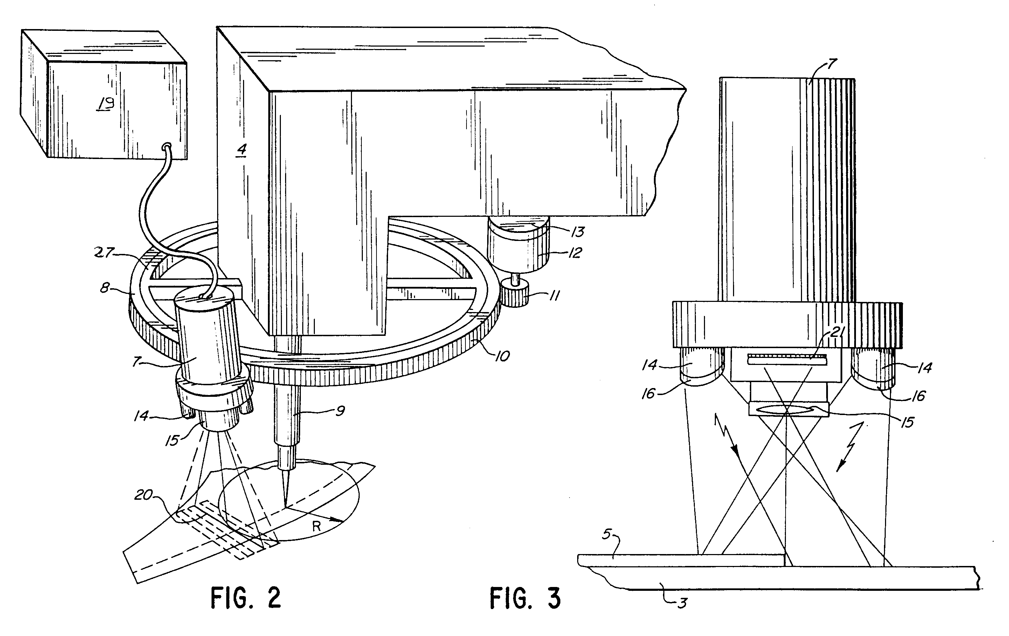

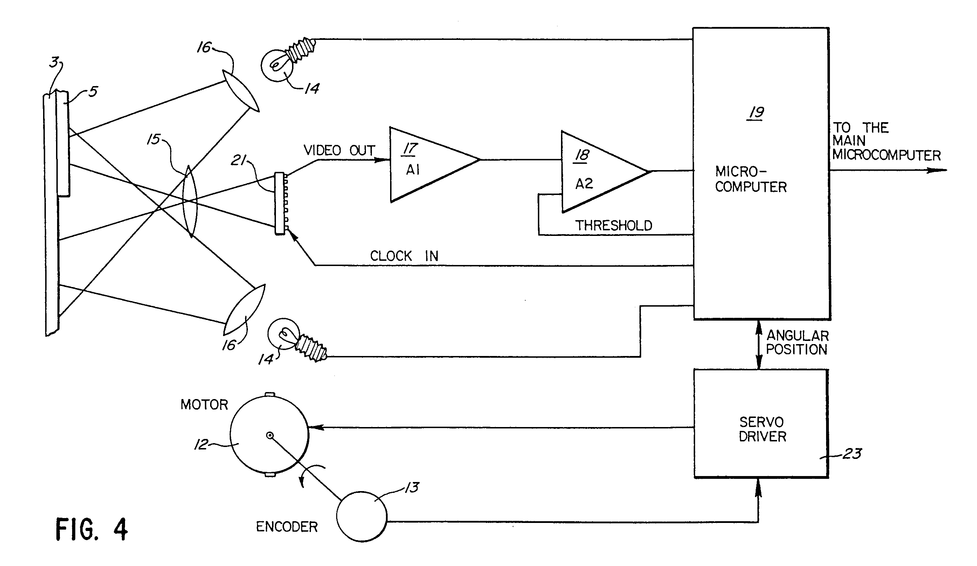

One preferred embodiment of the invention will be described hereinbelow with reference to Figs. 1 to 4. The sewing apparatus comprises a mainframe 1 on which is mounted a sewing head 4. Sewing head 4 may comprise any conventional sewing head which is adapted to be driven by computerized commands, is arranged for multi-directional sewing, and which includes a sewing needle affixed thereto via the needle bar 9.

A workholder 3 is coupled to the mainframe by a two-dimensional manipulator 2 for translating the workholder relative to the sewing head in any direction in the horizontal (X-Y) plane. Workholder 3 comprises a flat surface onto which the pieces 5 to be sewn are glued and/or taped with double sided adhesive coated tape 6, or retained thereon by any other known means. Manipulator 2 comprises any known X-Y table mechanism which is adapted to be driven, by computerized commands.

A scanning camera 7 is coupled for rotation about the sewing head 4 with the needle bar 9 as its axis of rotation. In the illustrated embodiment, a fixed circular bearing 27 is affixed to the sewing head, concentric with needle bar 9. Coupled to fixed bearing 27 is an external rotary bearing 8 on which scanning camera 7 is mounted. A circular gear train 10 encircles external rotary ring 8 and is coupled to a small gear or pinion 11 which transfers to it the rotary motion. Gear 11 is mounted on the axis of a servo motor 12 which also rotates a coaxial shaft encoder 13. Encoder 13 may comprise any conventional incremental encoder of suitable size, such ash for example, a series RI incremental encoder of Sopelem, Levallois-Perret, France. Thus, the angular position of the camera is controlled by rotating the external ring of the bearing to which it is attached, its position being measured by the encoder. Alternately: any other mounting means permitting computer-controlled rotation about the needle bar axis may be utilized.

Servo motor 12 which rotates the camera is driven by a servo driver 23. Servo driver 23, in turn, is controlled by a microprocessor 19 which is programmed to rotate the camera in accordance with the sewing pattern so that the direction of scanning is always perpendicular to the direction of sewing, a few millimeters ahead of the sewing point. This servo system may comprise any conventional closed-loop position control system, such as that marketed by E G & G Torque Systems, Massachusetts, U.S.A.

At least two lamps 14 are mounted on the camera along the axis of the scanning lines. Preferably, four lamps 14 are provided, one on each side of the scanning area. Each lamp 14 includes a collimating lens 16 to project a narrow beam of light on the sewn piece. Lamps 14 are controlled by microprocessor 19 such that light from one lamp at a time is projected on the sewn piece 5 in a direction that either causes the edge of the sewn piece to cast a shadow on the workholder 3 or enhances the edge by illuminating the edge directly. It will be appreciated that the illumination is programmed into microprocessor 19 together with the sewing pattern.

According to one preferred embodiment, scanning camera 7 comprises a line scanner including an imaging lens 15 which projects a one dimensional image onto a line scanning detector 21 inside the camera body. Detector 21 may comprise a charge coupled device (CCD), such as the CCD 143 of Fairchild Weston Corp., U.S.A., a current injection device (CID) or any other equivalent line detector. An example of a suitable camera is the CCD 5000 micro-camera marketed by Fairchild Weston Corp. Camera 7 is arranged to scan an imaginary line 20 on the piece 5 being sewn which is mounted on workholder 3. Line 20 is tangential to an imaginary circle around the needle's piercing point in the sewing plane.

According to an alternate embodiment, scanning camera 7 comprises an area scanning camera, such as a vidicon camera or a two-dimensional CCD, instead of a line scanner. An area scanning camera is arranged to scan a plurality of imaginary lines 20 (shown in broken lines), each of which is tangential to an imaginary circle around the needle's piercing point in the sewing plane.

Operation of the sewing apparatus illustrated in Figs. 1 to 4 is as follows. A main microprocessor (not shown) directs workholder 3 to move the sewn piece 5 in the required directions in order to generate the sewing pattern along the edge of the piece. The main microprocessor also controls microprocessor 19. It will be appreciated that a single microprocessor may be utilized to combine both functions. However, this is less practical.

As described above, lamps 14 provide diagonal illumination of the sewn piece 5 so that its edge casts a shadow on workholder 3. Camera 7 is rotated in accordance with the sewing pattern and synchronized with the workholder so that the line of scanning is always perpendicular to the direction of sewing, a few millimeters ahead of the sewing point. The contrast generated by the shadow enables the easy observation of the edge position on the image generated on the scanner.

The edge position is determined by transferring the video signal generated by CCD scanner 21 into a video amplifier 17. The amplification of this amplifier is controlled by the microprocessor 19 in a way that ensures a video signal well within the dynamic range of the amplifier. The pixel of the CCD scanner on which the edge is imaged generates a different output voltage. A comparator 18 compares the output signal from the amplifier 17 with a threshold level generated by the microprocessor 19, and outputs a triggering voltage whenever the video voltage from amplifier 17 varies relative to the threshold. This triggering voltage freezes the count of the pixel rate clock in a counter inside the microprocessor 19, as known per se. The data in this counter indicates the edge position of sewn piece 5 in pixel units.

Microprocessor 19 analyzes the signal generated by the scanner and indicates the position, on the scanner, of the edge of the sewn piece. The position data calculated by microprocessor 19 is transferred to the sewing system main processor. This information, together with the camera's angular position relative to the sewing head and workholder location, enables the main microprocessor to calculate the actual position of the edge in the scanning point. The expected edge position is known by the main processor which then determines the adjustment required to correct the sewing pattern. The main processor then modifies the sewing path in real time according to the piece's actual position by causing X-Y manipulator 2 to change the position of workholder 3.

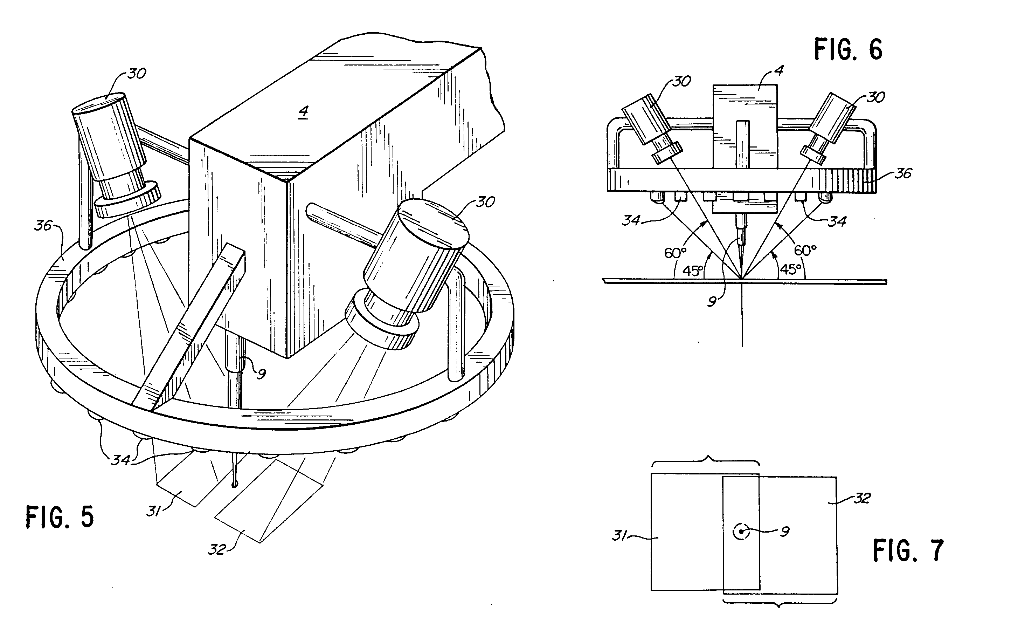

Referring now to Figs. 5 to 7 there is shown computerized sewing apparatus constructed and operative in accordance with an alternate embodiment of the invention. This embodiment is similar to that of Fig. 1 in all respects except the edge sensing apparatus. Like elements have like reference numerals and will not be described again.

The edge sensing apparatus of this embodiment comprises two scanning cameras 30 affixed to the sewing head 4 at an angle of 180 degrees from one another, as can be seen most clearly in Fig. 6. Each camera 30 comprises an area scanning camera, such as a vidicon camera or a two-dimensional CCD camera, preferably mounted at an angle of 30 degrees relative to the vertical. The cameras are disposed so as to scan the area 360 degrees around the needle in needle holder 9, as shown in Fig. 7. Preferably, there is partial overlap of the fields of view 31 and 32 of the first and second cameras 30.

Cameras 30 are controlled by microprocessor 19 which activates the appropriate camera in whose field of view the sewing is programmed to occur at the time. Thus, at any given time, generally only one camera will be operative for scanning. It will be appreciated that more than two cameras may be provided, if desired. Preferably, they are equally spaces around the sewing head for symmetrical overlap.

It will be appreciated that other edge sensing devices, other than cameras, may alternately be employed. It is important that 360 degrees around the needle be scannable by the sensing devices utilized.

A plurality of lamps 34 are mounted on a circular bearing 36 disposed concentrically with the needle axis. Lamps 34 are preferably equally spaced around the ring and are oriented diagonally to the sewing area. Most preferably, the lamps are oriented at about 45 degrees to the sewing area, as shown in Fig. 6. According to a preferred embodiment, between 12 and 24 lamps 34 are provided in bearing 36. Each lamp 34 includes a built-in collimating lens (now shown) which collimates the light exiting therefrom into parallel rays which cover the field of view.

Lamps 14 are controlled by microprocessor 19, as described with reference to Fig. 1, such that light from one lamp at a time is projected on the sewn piece 5 in a direction that either causes the edge of the sewn piece to cast a shadow on the workholder 3, or enhances the edge of piece 5 by illuminating it directly, if using the oppositely disposed lamp. It will be appreciated that the illumination and camera operation are programmed into microprocessor 19 together with the sewing pattern.

The advantages of the embodiment of Fig. 5 to 7 are several. First, the vision system is stationary; there is no need to rotate the camera, which results in a simpler system. The directional illumination is provided by selection of the appropriate lamp to be illuminated in order to enhance the required edge according to the orientation of the edge to be seen.

Second, there is no problem of rapid response to sharp direction changes which can occur with mechanical scanning. Switching from one lamp to another for a 90 degree direction change, for example, is fast and there is no need to wait for a 90 degree rotation of the entire camera and lamps assembly.

It will be appreciated by those skilled in the art that the invention is not limited to what has been shown and described hereinabove by way of example. Rather, the invention is limited solely by the claims which follow.

**Claims**

1. A computerized sewing apparatus comprising:

   a sewing head (4) permitting multi-directional sewing mounted on a main frame (1);

   a workholder (3) coupled to the main frame 1 and manipulated relative to the sewing head in a horizontal plane by a two dimensional manipulator (2);

   a microprocessor (19) coupled to said manipulator (2) for causing the workholder to move in a pre-programmed pattern relative to the sewing head;

   characterized by:

   means for sensing the edge position of an object (5) on said workholder (3) and arranged to provide an output signal corresponding thereto to said microprocessor;

said sensing means including a scanning camera (7) coupled to the sewing head (4) and disposed for rotation concentric to a needle bar (9) mounted in said sewing head and arranged for scanning at least one line (20) tangential to an imaginary circle around the needle' s piercing point in the sewing plane;

said camera (7) comprising means for generating a first output signal corresponding to said at least one scanned line;

encoder means (13) coupled to said camera (7) for providing a second output signal corresponding to the position of said camera;

means in microprocessor (19) for receiving said first and second output signals and converting them into a third output signal corresponding to the edge position of said object;

comparator means in said microprocessor (19) to compare the actual edge position with the programmed expected edge position and to determine any deviation; and

means coupled to said microprocessor for modifying the sewing path during sewing to compensate for any such deviation.

2. Sewing apparatus according to Claim 1 wherein said means for sensing comprises a line scanning camera (7) arranged to scan a single line (20) tangential to an imaginary circle around the needle's piercing point in the sewing plane.

3. Sewing apparatus according to Claim 1 wherein said means for sensing comprises an area scanning camera (7) arranged for scanning a plurality of lines tangential to an imaginary circle around the needle's piercing point in the sewing plane.

4. Sewing apparatus according to any one of Claims 1 to 3 wherein said workholder (3) comprises a flat holder mounted on the two dimensional manipulator (2) for movement in the horizontal plane; said manipulator (2) being activated by said microprocessor (19).

5. Sewing apparatus according to Claim 4 and wherein said object (5) is fixed to said holder by glue.

6. Sewing apparatus accordng to Claim 4 and wherein said object (5) is affixed to said holder by double-sided adhesive tape (6).

7. Sewing apparatus according to Claim 1 further comprising at least two illuminating lamps (14) coupled to said camera (7) and disposed for diagonal illumination of the edge of said object being scanned; said lamps being activated by said microprocessor.

8. Sewing apparatus according to Claim 7 and whrein said at least two illuminating lamps comprise four illuminating lamps (14).

9. Sewing apparatus according to Claim 1 wherein said camera (7) is coupled to said sewing head (4) by means of:

a fixed circular bearing (27) affixed to the sewing head, concentric with the needle bar (9);

an external rotary bearing (8) coupled to the fixed bearing;

a circular gear train (10) encircling said external rotary bearing to which said camera is coupled, said gear train being driven by a pinion (11);

a servo motor (12) arranged to rotate said pinion; and

a shaft encoder (13) coaxial with said servo motor.

10. Sewing apparatus according to Claim 3 and further comprising four illuminating lamps (14) coupled to said camera (7) and disposed for diagonal illumination of the edge of said object being scanned; said lamps being activated by said microprocessor (19).

11. Computerized sewing apparatus according to Claim 1, wherein said means for sensing the edge position of an object on said workholder comprises:

an area scanning camera (7) coupled to the sewing head (4) and disposed for rotation concentric to a needle bar (9) mounted in said sewing head and arranged for scanning a plurality of lines (20) each tangential to an imaginary circle around the needle's piercing point in the sewing plane;

four illuminating lamps (14) coupled to said camera and disposed for diagonal illumination of the edge of said object being scanned;

said camera comprising means for generating a first output signal corresponding to said plurality of scanned lines;

encoder means (13) coupled to said camera for providing a second output signal corresponding to the position of said camera; and

means in said microprocessor (19) for activating said lamps and for receiving said first and second output signals and converting them into a third output signal corresponding to the edge position of said object.

12. A computerized sewing apparatus comprising:

a sewing head (4) permitting multi-directional sewing mounted on a main frame (1);

a workholder (3) coupled to the main frame (1) and manipulated relative to the sewing head in a horizontal plane by a two dimensional manipulator (2);

a microprocessor (19) coupled to said manipulator (2) for causing the workholder to move in a pre-programmed pattern relative to the sewing head;

characterized by:

means for sensing the edge position of an object on said workholder and arranged to provide an output signal corresponding thereto to said microprocessor;

said sensing means being arranged for simultaneous scanning of an area around the sewing point greater than the field of view of a single scanner;

said sensing means including at least two stationary cameras 30 disposed about the sewing head (4) with scanning fields of view (31), (32) partially overlapping and together covering the entire 360 degrees two dimensional area around a needle bar (9) disposed in said sewing head;

a plurality of lights (34) mounted about the sewing head (4) for providing illumination from any desired direction;

comparator means in said microprocessor (19) to compare the actual edge position with the programmed expected edge position and to determine any deviation; and

means coupled to said microprocessor for modifying the sewing path during sewing to compensate for any such deviation.

**Revendications**

1. Machine à coudre informatisée comprenant :
une tête de couture (4) permettant de coudre dans des directions multiples, cette tête de couture étant montée sur un châssis principal (1) ; un porte-ouvrage (3) couplé au châssis principal (1) et pouvant être manipulé par rapport à la tête de couture dans un plan horizontal, au moyen d'un manipulateur à deux dimensions (2) ; un microprocesseur (19) couplé au manipulateur (2) pour amener le porte-ouvrage à se déplacer sur une trajectoire pré-programmée par rapport à la tête de couture ; machine à coudre caractérisée en ce que : des moyens de détection de la position du bord d'un objet (5) sur le porte-ouvrage (3) sont disposés de manière à fournir au microprocesseur un signal de sortie correspondant à cette position ; ces moyens de détection comprennent une caméra à balayage (7) couplée à la tête de couture (4) et disposée de manière à pouvoir tourner concentriquement par rapport à une tige porte-aiguille (9) montée dans la tête de couture et destinée à balayer au moins une ligne (20) tangente à un cercle imaginaire situé autour du point de perçage de l'aiguille dans le plan de couture, la caméra (7) comprenant des moyens de production d'un premier signal de sortie correspondant à la ligne de balayage au moins unique, des moyens de codage (13) couplés à la caméra (7) pour fournir un second signal de sortie correspondant à la position de la caméra, des moyens situés dans le microprocesseur (19) pour recevoir le premier signal de sortie et le second signal de sortie de manière à les transformer en un troisième signal de sortie correspondant à la position du bord de l'objet, des moyens de comparateur situés dans le microprocesseur (19) pour comparer la position réelle du bord à la position prévue du bord, et pour déterminer tout écart éventuel ; et des moyens couplés au microprocesseur pour modifier la trajectoire de couture pendant la couture de manière à compenser un tel écart éventuel.

2. Machine à coudre selon la revendication 1, caractérisée en ce que les moyens de détection comprennent une caméra à balayage de ligne (7) destinée à balayer une ligne unique (20) tangente à un cercle imaginaire situé autour du point de perçage de l'aiguille dans le plan de couture.

3. Machine à coudre selon la revendication 1, caractérisée en ce que les moyens de détection comprennent une caméra à balayage de zone (7) destinée à balayer à un certain nombre de lignes tangentes à un cercle imaginaire situé autour du point de perçage de l'aiguille dans le plan de couture.

4. Machine à coudre selon l'une quelconque des revendications 1 à 3, caractérisé en ce que le porte-ouvrage (3) comprend un support plat monté sur le manipulateur à deux dimensions (2) pour se déplacer dans le plan horizontal ; ce manipulateur (2) étant commandé par le microprocesseur (19).

5. Machine à coudre selon la revendication 4, caractérisée en ce que l'objet (5) est fixé au support par la colle.

6. Machine à coudre selon la revendication 4, caractérisée en ce que l'objet (5) est fixé au support par une bande adhésive double face (6).

7. Machine à coudre selon la revendication 1, caractérisée en ce qu'elle comprend en outre deux lampes d'éclairage (14) couplées à la caméra (7) et disposées de manière à éclairer diagonalement le bord de l'objet en cours de balayage ; ces lampes étant commandées par le microprocesseur.

8. Machine à coudre selon la revendication 7, caractérisée en ce que les lampes d'éclairage au moins au nombre de deux, comprennent quatre lampes d'éclairage (14).

9. Machine à coudre selon la revendication 1, caractérisée en ce que la caméra (7) est couplée à la tête de couture (4) par : un support circulaire fixe (17) fixé à la tête de couture concentriquement par rapport à la tige pote-aiguille (9) ; un support extérieur rotatif (8) accouplé au support fixe ; un système d'engrenage circulaire (10) encerclant le support extérieur rotatif auquel la caméra est accouplée, se système d'engrenage étant entraîné par un pignon (11) ; un servomoteur (12) destiné à faire tourner le pignon ; et un codeur d'arbre (13) coaxial avec le servomoteur.

10. Machine à coudre selon la revendication 3, caractérisée en ce qu'elle comprend, en outre, quatre lampes d'éclairage (14) couplées à la caméra (7) et disposées pour éclairer diagonalement le bord de l'objet en cours de balayage ; ces lampes étant commandées par le microprocesseur (19).

11. Machine à coudre selon la revendication 1, caractérisée en ce que les moyens de détection de la position du bord d'un objet sur le porte-ouvrage comprennent : une caméra à balayage de zone (7) couplée à la tête de couture (4) et disposée de manière à tourner concentriquement par rapport à une tige porte-aiguille (9) montée dans la tête de couture, cette caméra étant destinée à balayer un certain nombre de lignes (20) tangentes chacune à un cercle imaginaire situé autour du point de perçage de l'aiguille dans le plan de couture ; quatre lampes d'éclairage (14) couplées à la caméra et disposées de manière à éclairer diagonalement le bord de l'objet en cours de balayage ; cette caméra comprenant des moyens de production d'un premier signal de sortie correspondant aux différentes lignes balayées ; des moyens de codage (13) couplés à la caméra pour fournir un second signal de sortie correspondant à la position de la caméra

; et des moyens situés dans le microprocesseur (19) pour commander les lampes, pour recevoir le premier signal de sortie et le second signal de sortie, et pour les transformer en un troisième signal de sortie correspondant à la position du bord de l'objet.

12. Machine à coudre informatisée comprenant : une tête de couture (4) permettant de coudre dans des directions multiples, cette tête de couture étant montée sur un châssis principal (1) ; un porte-ouvrage (3) couplé au châssis principal (1) et pouvant être manipulé par rapport à la tête de couture dans un plan horizontal, au moyen d'un manipulateur à deux dimensions (2) ; un microprocesseur (19) couplé au manipulateur (2) pour amener le porte-ouvrage à se déplacer sur une trajectoire pré-programmée par rapport à la tête de couture ; machine à coudre caractérisée en ce que : des moyens de détection de la position du bord d'un objet sur le porte-ouvrage sont destinés à fournir au microprocesseur un signal de sortie correspondant à cette position ; ces moyens de détection étant disposés de manière à balayer simultanément, autour du point de couture, une zone plus grande que le champ de vision d'un dispositif de balayage unique ; ces moyens de détection comprenant au moins deux caméras fixes (30) disposées autour de la tête de couture (4) de façon que les champs de vision de balayage (31), (32) se chevauchent partiellement et couvrent ensemble la zone à ceux dimensions totale de 360° autour d'une tige porte-aiguille (9) montée dans la tête de couture ; un certain nombre de lampes (34) montées autour de la tête de couture (4) pour fournir un éclairage provenant de n'importe quelle direction voulue, des moyens de comparateur situés dans le microprocesseur (19) pour comparer la position réelle du bord à la position programmé prévue de ce bord, et pour déterminer tout écart éventuel ; et des moyens couplés au microprocesseur pour modifier la trajectoire de couture pendant la couture de manière à compenser un tel écart éventuel.

**Patentansprüche**

1. Computerisierte Nähvorrichtung mit
einem Nähkopf (4), welcher multidirektionales Nähen erlaubt und auf einem Hauptrahmen (1) montiert ist;
einem Werkstückhalter (3), der mit dem Hauptrahmen (1) verbunden ist und relativ zu dem Nähkopf in einer horizontalen Ebene durch einen zweidimensionalen Manipulator (2) manipuliert wird;

einem Mikroprozessor (19), der mit dem Manipulator (2) verbunden ist, um zu bewirken, daß der Werkstückhalter in einem vorprogrammierten Muster relativ zu dem Nähkopf bewegt wird;

**gekennzeichnet durch**

eine Einrichtung zum Erfassen (Sensoreinrichtung) der Randposition eines Objekts (5) auf dem Werkstückhalber (3) und zum Zuführen eines sich darauf beziehenden Ausgangssignals zu dem Mikroprozessor;

wobei die Sensoreinrichtung eine Abtastkamera (7) aufweist, die mit dem Nähkopf (4) verbunden und zur Rotation konzentrisch zu einer in dem Nähkopf montierten Nadelstange (9) angeordnet und vorgesehen ist zum Abtasten wenigstens einer Linie (20) tangential zu einem imaginären Kreis um den Nadeldurchstoßpunkt in der Nähebene;

wobei die Kamera (7) eine Einrichtung zur Erzeugung eines ersten Ausgangssignals umfaßt, welches sich auf die wenigstens eine Abtastlinie bezieht;

eine mit der Kamera (7) verbundene Kodiereinrichtung (13) zur Erzeugung eines zweiten Ausgangssignals, das sich auf die Position der Kamera bezieht;

eine Einrichtung in dem Mikroprozessor (19), für den Empfang des ersten und des zweiten Ausgangssignals und ihre Umwandlung in ein drittes Ausgangssignal, das sich auf die Randposition des Objektes bezieht;

eine Vergleichseinrichtung in dem Mikroprozessor (19), zum vergleichen der tatsächlichen Randposition mit der programmierten erwarteten Randposition und zum Bestimmen von Abweichungen; und

eine mit dem Mikroprozessor verbundene Einrichtung zur Modifizierung des Nähweges während des Nähens zum Kompensieren solcher Abweichungen.

2. Nähvorrichtung nach Anspruch 1, bei der die Sensoreinrichtung eine Linienabtastkamera (7) umfaßt, die vorgesehen ist zum Abtasten einer einzelnen Linie (20) tangential zu einem imaginären Kreis um den Nadeldurchstoßpunkt in der Nähebene.

3. Nähvorrichtung nach Anspruch 1, bei der die Sensoreinrichtung eine Flächenabtastkamera (7) umfaßt, die vorgesehen ist zum Abtasten einer Vielzahl von Linien (20) tangential zu einem imaginären Kreis um den Nadeldurchstoßpunkt in der Nähebene.

4. Nähvorrichtung nach einem der Ansprüche 1 bis 3, bei der der Werkstückhalter (3) eine flache Halterung umfaßt, die auf dem zweidimensionalen Manipulator (2) zur Bewegung in der horizontalen Ebene montiert ist, wobei der Manipulator (2) durch den Mikroprozessor (19) aktiviert wird.

5. Nähvorrichtung nach Anspruch 4, bei der das Objekt (5) auf der Halterung durch Kleber befestigt ist.

6. Nähvorrichtung nach Anspruch 4, bei der das Objekt (5) auf der Halterung durch ein doppelseitiges Klebeband (6) befestigt ist.

7. Nähvorrichtung nach Anspruch 1, ferner mit mindestens zwei Beleuchtungslampen (14), die mit der Kamera (7) verbunden und zur diagonalen Beleuchtung des Randes des abgetastet werdenden Objekts angeordnet sind, wobei die Lampen durch den Mikroprozessor aktiviert sind.

8. Nähvorrichtung nach Anspruch 7, bei der die mindestens zwei Beleuchtungslampen vier Beleuchtungslampen (14) umfassen.

9. Nähvorrichtung nach Anspruch 1, bei der die Kamera (7) mit dem Nähkopf (4) gekoppelt ist durch

ein fixiertes kreisförmiges Lager (27), das an dem Nahkopf konzentrisch zu der Nadelstange (9) befestigt ist;

ein externes Drehlager (8), das mit dem fixierten Lager verbunden ist;

ein kreisförmiges Getrieberad (10), das das externe Drehlager, mit welchem die Kamera verbunden ist, umgibt, wobei das Getrieberad durch ein Ritzel (11) angetrieben ist;

einen Servomotor (12), der zum Drehen des Ritzels vorgesehen ist, und

einen zu dem Servomotor koaxialen Wellenkodierer (13).

10. Nähvorrichtung nach Anspruch 3, ferner mit vier Beleuchtungslampen (14), die mit der Kamera (7) verbunden und zur diagonalen Beleuchtung des Randes des abgetastet werdenden Objekts angeordnet sind, wobei die Lampen durch den Mikroprozessor (19) aktiviert sind.

11. Computerisierte Nähvorrichtung nach Anspruch 1, bei der die Sensoreinrichtung zum Erfassen der Randposition eines Objekts auf dem Werkstückhalter umfaßt:

eine Flächenabtastkamera (7), die mit dem Nähkopf (4) verbunden und zur Rotation konzentrisch zu einer in dem Nähkopf montierten Nadelstange (9) angeordnet und dazu vorgesehen ist, eine Vielzahl von Linien (20), von denen jede tangential zu einem imaginären Kreis um den Nadeldurchstoßpunkt in der Nähebene verläuft, abzutasten;

vier Beleuchtungslampen (14), die mit der Kamera verbunden und zur diagonalen Beleuchtung des Randes des abgetastet werdenden Objekts angeordnet sind;

wobei die Kamera eine Einrichtung zur Erzeugung eines ersten Ausgangssigals umfaßt, welches sich auf die Vielzahl von abgetasteten Linien bezieht;

eine mit der Kamera verbundene Kodiereinrichtung (13) zur Erzeugung eines zweiten Ausgangssignals, das sich auf die Position der Kamera bezieht; und

eine in dem Mikropropzessor (19) vorgesehene Einrichtung zur Aktivierung der Lampen und zum Empfang des ersten und des zweiten Ausgangssignals und zu deren Umwandlung in ein drittes Ausgangssignal, das sich auf die Randposition des Objektes bezieht.

12. Computerisierte Nähvorrichtung mit

einem Nähkopf (4), welcher multidirektionales Nähen erlaubt und auf einem Hauptrahmen (1) montiert ist;

einem Werkstückhalter (3), der mit dem Hauptrahmen (1) verbunden ist und relativ zu dem Nähkopf in einer horizontalen Ebene durch einen zweidimensionalen Manipulator (2) manipuliert wird;

einem Mikroprozessor (19), der mit dem Manipulator (2) verbunden ist, um zu bewirken, daß der Werkstückhalter in einem vorprogrammierten Muster relativ zu dem Nähkopf bewegt wird;

**gekennzeichnet durch**

eine Einrichtung zum Erfassen (Sensoreinrichtung) der Randposition eines Objekts auf dem Werkstückhalter und zum Zuführen eines sich darauf beziehenden Ausgangssignals zu dem Mikroprozessor;

wobei die Sensoreinrichtung vorgesehen ist zum gleichzeitigen Abtasten eines un den Nähpunkt gelegenen Bereiches, der größer ist als das Sichtfeld eines einzelnen Abtasters;

wobei die Sensoreinrichtung mindestens zwei stationäre Kameras (30) aufweist, die um den Nähkopf (4) angeordnet sind mit Abtastsichtfeldern (31,32), die sich teilweise überlappen und zusammen den gesamten zweidimensionalen 360 Grad-Bereich um die Nadelstange (9), die in dem Nähkopf angeordnet ist, überstreichen;

eine Vielzahl von um den Nähkopf (4) montierten Lampen (34) zur Schaffung Von Beleuchtung aus jeder gewünschten Richtung;

eine Vergleichseinrichtung in dem Mikroprozessor (19), zum Vergleichen der tatsächlichen Randposition mit der Programmierten erwarteten Randposition und zum Bestimmen von Abweichungen; und

eine mit dem Mikroprozessor verbundene Einrichtung zur Modifizierung des Nähweges während des Nähens zum Kompensieren solcher Abweichungen.

FIG. I

FIG. 2

FIG. 3

EP 0 309 069 B1

FIG. 4

FIG. 6

FIG. 7

FIG. 5